# EUROPEAN PATENT SPECIFICATION

(11) **EP 1 944 541 B1**
(45) Date of publication and mention of the grant of the patent: **13.01.2010**
(21) Application number: 07024238.3
(22) Date of filing: 13.12.2007
(51) Int. Cl.: F21S 8/02

(54) **Luminaire**
Leuchte
Luminaire

(30) Priority: 15.01.2007 JP 2007005894
(43) Date of publication of application: 16.07.2008
(73) Proprietor: Stanley Electric Co., Ltd., Meguro-ku Tokyo 153-8636 (JP)
(72) Inventor: Kobinata, Katsumi, Tokyo (JP); Mochizuki, Katsuya, Tokyo (JP); Kondo, Toshiyuki, Tokyo (JP)
(74) Representative: Emde, Eric

(56) References cited:
- EP-A- 0 416 253
- WO-A-02/097325
- DE-U1- 20 300 472

## Description

### BACKGROUND OF THE INVENTION

### Field of the Invention

The present invention relates to a luminaire, and more particularly to a luminaire mainly available for illuminating around feet.

### Description of the Related Art

Luminaires are employed for various uses and purposes. One of luminaires for assisting safe lives is a footlight. Conventionally proposed footlights are: of the type that is buried in a lower portion of an interior wall to illuminate a floor surface from the wall (for example, see Patent Document 1) ; of the type that comprises a portable flashlight detachably attached to a wall to illuminate a floor surface (for example, see Patent Document 2) ; and of the type that is buried in furniture to illuminate around the furniture and feet (for example, see Patent Document 3).
Patent Document 1: JP-A 2005-243256
Patent Document 2: JP-A 2001-327524
Patent Document 3: JP-Y 3099041

The wall-attached luminaire radiates illuminating light from the wall. Accordingly, any shielding members such as furniture can not be located close to the luminaire-attached wall, which lowers the using flexibility of a space.

The buried luminaire requires a burying space and a special burying structure, which cause a sense of incongruity on appearances and an increase in cost.

Further, the footlights of the prior art put emphasis on practicality though they have a problem because the ability of producing illuminating spaces is hardly taken into account.

EP-A-0 416 253 was used as a basis for the preamble of claim 1 and discloses a light, such as a headlight, a signalling light, a lighting fixture or the like, which is provided with an essentially flat, light-transmitting emitter element in whose circumferential edge a multiplicity of luminous elements are inserted. The edges are provided with an inwardly reflecting layer. The front side of the emitter element is constructed as an emitting area, while the whole of the rear side is provided with an inwardly reflecting layer. Such a light can be used in conjunction with a very flat design, low power consumption and a large homogeneous luminous area for motor vehicle lighting, in particular.

WO 02/097325 A1 discloses a luminaire including a light transmissive optical element, a plurality of light sources, a light source support structure, and a light reflective surface. The light transmissive optical element, which preferably is a quasi-toroidal light transforming collector, is spaced from and disposed about an axis. The plural light sources are disposed radially outwardly of the optical element relative to the axis, to produce a corresponding plurality of light beams. Each light source directs its light beam toward the optical element. The optical element is shaped and adapted to collect and transform the light beams and pass them in the direction of the axis. The light reflective surface, which preferably is a curved conical collimating combiner, and is disposed along the axis.

Attention is also drawn to DE 203 00 472 U1 which discloses a recessed lamp which has a housing with a front opening enclosed by a peripheral flange, provided with a frame for reception of a front lamp glass, at least the peripheral flange and frame parts of the housing being transparent so that they are internally illuminated, e.g. via light-emitting diodes contained in an intermediate space between the inside surface of the housing and a central light dispersion disc at the rear of the front lamp glass.

### SUMMARY OF THE INVENTION

The present invention has been made in consideration of the above problem and has an object to provide a compact and inexpensive luminaire rich in functionality with higher using flexibility of spaces, capable of producing illuminating spaces rich in the ability of designing, with a smaller attachment space and no sense of incongruity on appearances of an attachment portion.

According to the present invention, a luminaire is provided as set forth in claim 1. Preferred embodiments of the present invention may be gathered from the dependent claims.

The luminaire of the present invention comprises a light transmissive plate and a reflecting plate provided oppositely almost in parallel. It also comprises a plurality of successive oblique reflective surfaces in the shape of a truncated polyhedral pyramid or truncated cone having a top surface located opposite the light transmissive plate and a bottom surface located opposite the reflecting plate. Individual lenses, light incidence lenses, and LEDs are arranged at certain positions on circumferences of concentric circles centered on a centerline of the truncated polyhedral pyramid or truncated cone and having radii R1, R2 and R3 in increasing order of distance from the center. With this configuration, lights emitted from the LEDs and guided through the light incidence lenses trace such optical paths as reflected at the oblique reflective surfaces and/or the reflecting plate, or reflected and refracted at the individual lenses, and released to external from the light transmissive plate.

As a result, a luminaire can be realized, which is compact and inexpensive, rich in functionality with higher using flexibility of spaces, capable of producing illuminating spaces rich in the ability of designing, with a smaller attachment space and no sense of incongruity on appearances of an attachment portion.

### BRIEF DESCRIPTION OF THE DRAWINGS

Fig. 1 is an exploded stereoscopic view of an embodiment associated with a luminaire of the present invention.
Fig. 2 is a perspective view of individual lenses according to the embodiment.
Fig. 3 is a cross-sectional view of the embodiment associated with the luminaire of the present invention.
Fig. 4 is a partial top view of the embodiment associated with the luminaire of the present invention.
Fig. 5 is a schematic view showing optical paths in the embodiment associated with the luminaire of the present invention.
Fig. 6 is a schematic view similarly showing optical paths in the embodiment associated with the luminaire of the present invention.
Fig. 7 is a partial cross-sectional view of a footcloth with the luminaire of the present invention buried therein.

### DETAILED DESCRIPTION OF THE EMBODIMENTS

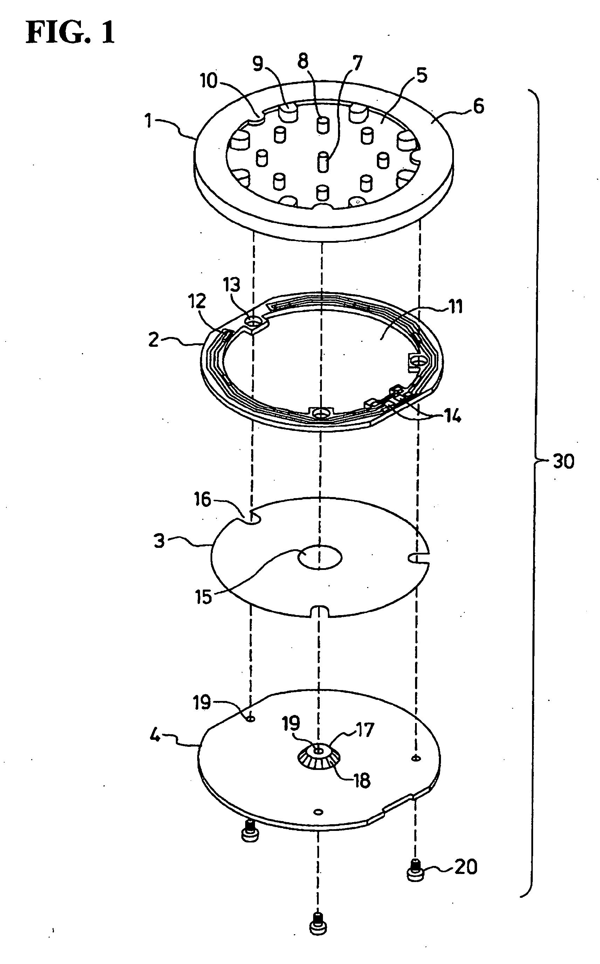

Preferred embodiments of the invention will now be described in detail with reference to Figs. 1-7 (denoting the same parts with the same reference numerals). The below-described embodiments are suitable examples of the present invention and accordingly given various preferred limitations though the scope of the present invention is not limited to these embodiments without a particular statement to limit the present invention present in the following description.

Fig. 1 is an exploded stereoscopic view of an embodiment associated with a luminaire of the present invention. The luminaire 30 of the present invention mainly comprises a case 1, a printed circuit board 2, a reflecting plate 3 and a back lid 4.

The case 1 includes a disc-like, light transmissive plate 5, and a frame 6 located around the outer circumference of the light transmissive plate 5 and having a cylindrical projection protruding from the outer rim of an annular flat portion to one surface, which are integrated through two-color molding.

The light transmissive plate 5 includes a first, columnar boss 7 with a screw-fitting hole formed at the central position of the disc. A plurality of columnar, individual lenses 8 are formed at respective positions almost on an identical circle centered on the central position of the disc, which positions are separated by almost equal central angles. A plurality of columnar, light incidence lenses 9 are formed at respective positions almost on an identical concentric circle outside the circle with the individual lenses positioned thereon, which positions are separated by almost equal central angles.

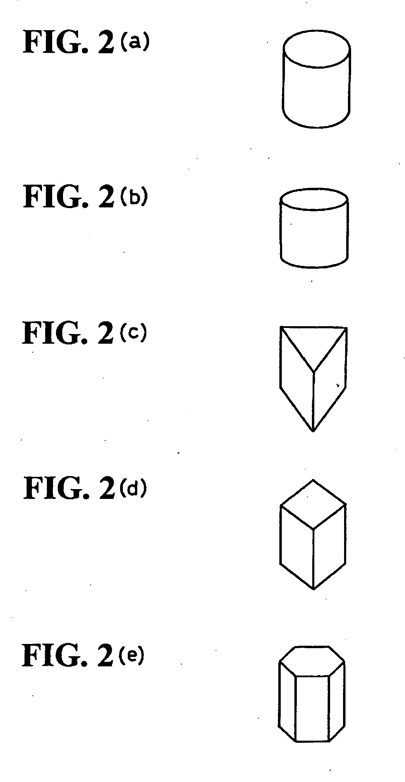

As shown in Fig. 2, the individual lenses 8 are desired to have any one of the shapes of (a) circular cylinders, (b) elliptic cylinders, and prisms suchas (c) triangular cylinders, (d) tetragonal cylinders and (e) hexagonal cylinders. The light incidence lenses 9 are desired to have a surface opposing the center of the light transmissive plate 5, which is formed as part of an approximately circular cylinder or approximately elliptic cylinder curved toward the center.

The frame 6 includes a notch provided through part of the cylindrical projection to ensure a space for receiving a later-described connector therein. Second, columnar bosses 10 with screw-fitting holes are formed along the inner rim of the frame at respective positions almost on an identical circle centered on the central position of the light transmissive plate 5, which positions are separated by almost equal central angles. The second boss 10 is formed in a stepped shape with a larger proximal end diameter than a distal end diameter.

The first boss 7, the individual lenses 8 and the light incidence lenses 9 are formed of transparent resinous material integrally with the disc-like, light transmissive plate 5. The second bosses 10 are formed of opaque resinous material integrally with the frame 6. The individual lenses 8 and the light incidence lenses 9 are prepared equal in number, both eight in the present embodiment. The second bosses 10 are prepared three in number.

The printed circuit board 2 exhibits an annular shape with the central portion hollowed out. A plurality of LEDs 12 are mounted almost on an identical circle centered on a virtual central position of the hollowportion 11 at respective positions separated by almost equal central angles. Each LED 12 is mounted in such a state that a respective optical axis is directed in parallel with the printed circuit board 2 and toward the virtual central position.

Similarly, a plurality of screw-targeted through holes 13 are formedalmost on an identical circle centeredon the virtual central position at respective positions separated by almost equal central angles. In addition, electrode patterns 14 are provided in part for connecting terminals of a connector at the time of mounting the connector. The printed circuit board 2 has a white resist layer, for example, silk-printed on a surface except the LED-mounting electrode patterns and the connector-mounting electrode patterns 14 on the printed circuit board 2 . The screw-targeted through holes 13 are three in number in the present embodiment.

The reflecting plate 3 exhibits a disc shape. It has a bore 15 for fitting the truncated_polyhedral pyramid at the central portion, and a plurality of screw-targeted notches 16 formed almost at respective positions on an identical circle centered on the virtual central position of the bore 15 for fitting the tapered reflective portion, which positions are separated by almost equal central angles. The screw-targeted notches 16 are three in number in the present embodiment.

The back lid 4 has a protruded, truncated polyhedral pyramid portion 17 at the central portion of the disc. The truncated polyhedral pyramidal shape 17 has oblique reflective surfaces 18 on sides. A plurality of screw-fastening holes 19 are provided at the center of the truncated polyhedral pyramid 17 and on an identical circle centered on the central position of the truncated polyhedral pyramid 17 at respective positions separated by almost equal central angles. In the present embodiment the screw-fastening holes 19 are four in number in total.

In assembling the above-described elements, the LED 12-mounted, printed circuit board 2 is housed in the case 1 such that the LED 12-mounted surface faces the light transmissive plate 5 in the case 1. The reflecting plate 3 is then arranged on the opposite surface of the printed circuit board 2 to the LED 12-mounted surface. The back lid 4 is then housed thereon in such a state that the truncated polyhedral pyramid 17 is fitted in the bore 15 for fitting the truncated polyhedral pyramid of the reflecting plate 3.

Finally, screws 20 are inserted from the rear of the back lid 4, in turn, via the screw-fastening holes 19 provided through the back lid 4, via the screw-targeted notches 16 provided through the reflecting plate 3, and via the screw-targeted through holes 13 provided through the printed circuit board 2, and then screw-fitted into screw-fitting holes provided through the case 1, thereby fastening all the elements together to complete the assembling work.

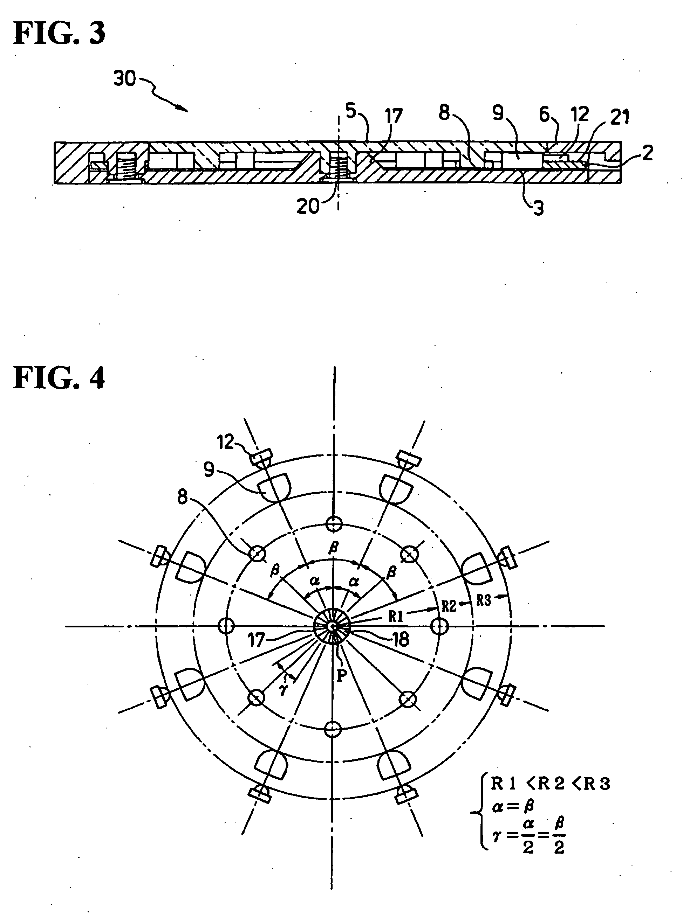

Fig. 3 shows a section of the completed luminaire 30. The printed circuit board 2 impinges on the step of the second boss 10, thereby ensuring a gap between the LED-mounting surface 21 of the printed circuit board 2 and the frame 6 to house the LED 12 in the gap.

The tip surfaces of the individual lenses 8 and light incidence lenses 9 impinge on the reflecting plate 3, and the upper surface of the truncated polyhedral pyramid 17 impinges on the light transmissive plate 5. This makes it possible to ensure a gap between the case 1 and the back lid 4 and retain the gap against the compressive stress exerted from both the case 1 and the back lid 4.

In this case, the outer surface of the frame 6 of the case 1 is almost flush with the outer surface of the light transmissive plate 5. In addition, the tip surface of the cylindrical projection of the frame 6 of the case 1 is flush with the outer surface of the back lid 4.

The optical system in the luminaire of the present invention is described next. Fig. 4 shows relations among the positions of the LEDs 12, the light incidence lenses 9, the individual lenses 8 and the oblique reflective surfaces 18 when the luminaire is seen from the front of the luminaire in the direction of illumination (above the light transmissive plate 5 of the case 1).

Three concentric circles are set sharing the center P and having respective radii R1, R2, R3, in which R1, R2, R3 have a relation of R1 < R2 < R3. The individual lenses 8 are arranged on intersections of the circle with the radius R1 and straight lines passing through the center P and radially extending at central angles α that equally divide a circumference.

The light incidence lenses 9 are arranged such that the apexes of the light incidence lenses 9 locate on intersections of the circle with the radius R2 and bisectors (with a central angle β) of the central angles α. The light incidence lenses 9 are directed such that respective optical axes pass through the center P.

The LEDs 12 are mounted such that the apexes of the LEDs 12 locate on intersections of the circle with the radius R3 and radial extensions of straight lines that connect the center P with the positions of the apexes of the light incidence lenses 9. The LEDs 12 are directed such that respective optical axes pass through the center P.

Therefore, the individual lenses 8, the light incidence lenses 9 and the LEDs 12 are all arranged equal in number, each eight in the present embodiment.

The truncated polyhedral pyramid 17 has sides double the number of the individual lenses 8, the light incidence lenses 9 and the LEDs 12. In the present embodiment the truncated polyhedral pyramid 17 is shaped in a 16-hedral pyramid. The oblique reflective surfaces 18 formed on the sides of the truncated polyhedral pyramid 17 locate such that projected lines of both sides (ridges) of the oblique reflective surface 18 onto the light transmissive plate 5 turn in bisectors (with a central angle y = α/2 = β/2) of an angle (angle of intersection) between two straight lines passing through the center P and through the individual lens 8 and the light incidence lens 9 adjacent thereto.

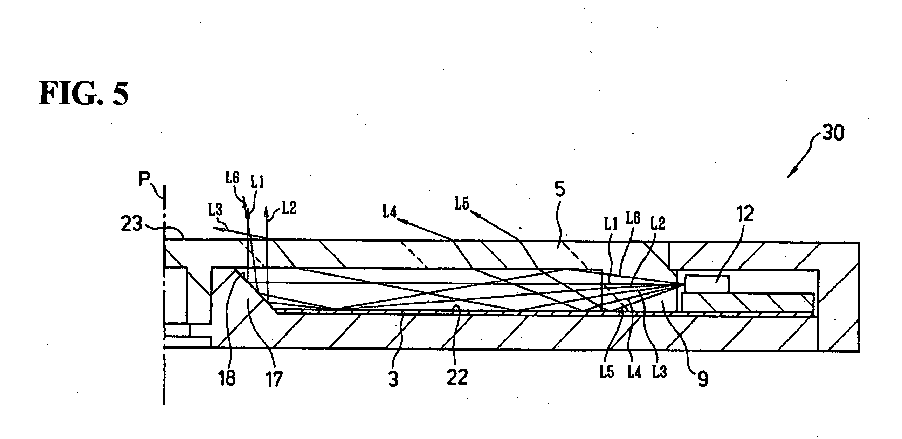

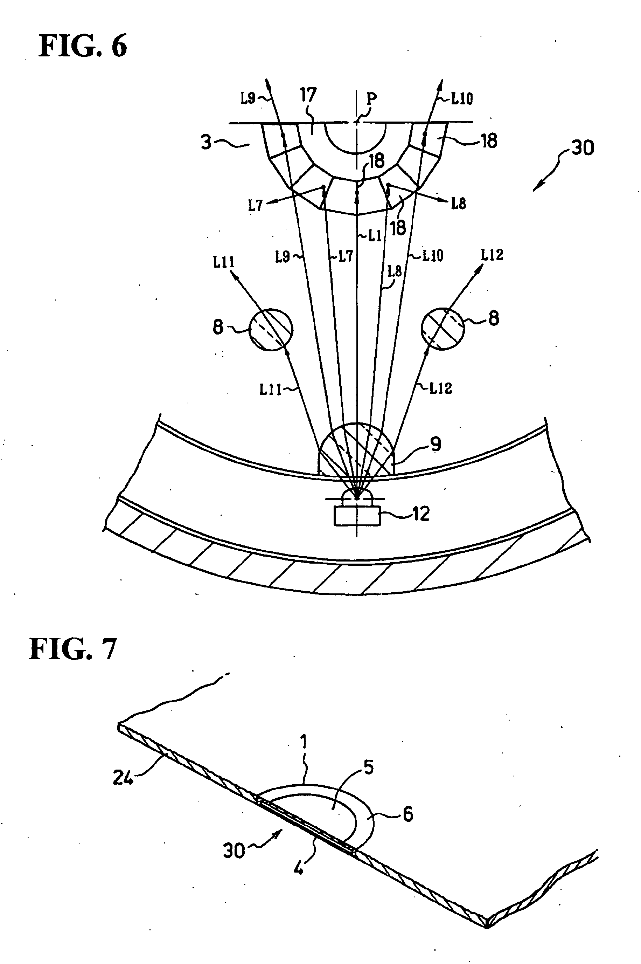

Figs. 5 and 6 schematically show optical paths of lights emitted from the LEDs. Fig. 5 is a cross-sectional view of the luminaire when the luminaire is sectioned along a plane normal to the reflecting plate 3. Fig. 6 is a cross-sectional view of the luminaire when the luminaire is sectioned along a plane parallel to the reflecting plate 3.

As shown in Fig. 5, a light beam L1 emitted from the LED 12 toward the center P of the truncated polyhedral pyramid 17 in parallel with the reflecting plate 3 is guided through the light incidence lens 9 to the oblique reflective surface 18 of the truncated polyhedral pyramid 17, then reflected from the oblique reflective surface 18 to the light transmissive plate 5, then guided through the light transmissive plate 5 and released to external.

In addition, among light beams L2-L5 emitted from the LED 12 toward the center P of the truncated polyhedral pyramid 17 in the direction of the reflecting plate 3, the light beam L2 emitted at a relatively shallower angle relative to the reflecting plate 3 is guided through the light incidence lens 9 to a reflective surface 22 of the reflecting plate 3, then reflected from the reflective surface 22 to the oblique reflective surface 18 of the truncated polyhedral pyramid 17, then reflected from the oblique reflective surface 18 to the light transmissive plate 5, then guided through the light transmissive plate 5 and released to external.

Among the light beams L2-L5 emitted from the LED 12 toward the center P of the truncated polyhedral pyramid 17 in the direction of the reflecting plate, the light beams L3-L5 emitted at relatively deeper angles relative to the reflecting plate 3 are guided through the light incidence lens 9 to the reflective surface 22 of the reflecting plate 3, then reflected from the reflective surface 22 to the light transmissive plate 5, then guided through the light transmissive plate 5 and released to external.

A further light beam L6 emitted from the LED 12 toward the center P of the truncated polyhedral pyramid 17 in the direction of the light transmissive plate 5 is guided through the light incidence lens 9 to the light transmissive plate 5, then reflected (totally reflected) from the light transmissive plate 5 to the reflective surface 22 of the reflecting plate 3, then reflected from the reflective surface 22 to the oblique reflective surface 18 of the truncated polyhedral pyramid 17, then reflected from the oblique reflective surface 18 to the light transmissive plate 5, then guided through the light transmissive plate 5 and released to external.

Among the lights released from the light transmissive plate 5, the light beams reflected from the oblique reflective surface 18 of the truncated polyhedral pyramid 17 and tracing the optical paths to the light transmissive plate 5 are released at deeper angles relative to a light exit surface 23 of the light transmissive plate 5 (in a direction almost normal to the light exit surface 23) while the light beams reflected from the reflective surface 22 of the reflecting plate 3 and tracing the optical paths to the light transmissive plate 5 are released at shallower angles relative to the light reflective surface of the reflecting plate 3 (in a direction almost parallel to the light exit surface 23).

Therefore, the light beams released from the light transmissive plate 5 can be directed toward regions not only above but also beside the luminaire 30 to illuminate over an extremely wide range.

On the other hand, as shown in Fig. 6, the light beam L1 emitted from the LED 12 toward the center P of the truncated polyhedral pyramid 17 in parallel with the reflecting plate 3 is guided through the light incidence lens 9 to the oblique reflective surface 18 of the truncated polyhedral pyramid 17, then reflected from the oblique reflective surface 18 to the light transmissive plate (not shown), then guided through the light transmissive plate and released to external.

Light beams L7-L10 emitted from the LED 12 toward the proximity of the truncated polyhedral pyramid 17 in parallel with the reflectingplate 3 are guided through the light incidence lens 9 to the oblique reflective surfaces 18 of the truncated polyhedral pyramid 17, then reflected from the oblique reflective surfaces 18 to the light transmissive plate, then guided through the light transmissive plate and released to external.

Light beams L11, L12 emitted from the LED 12 toward outside the proximity of the truncated polyhedral pyramid 17 in parallel with the reflectingplate 3 are guided through the light incidence lens 9 to the individual lenses 8, then guided through the individual lenses 8 and released from the individual lenses 8.

Therefore, it is found that also in Fig. 6 the light beams released from the light transmissive plate can be directed toward regions not only above but also beside the luminaire 30 as described in Fig. 5.

In particular, the plural individual lenses 8 formed at certain positions on the light transmissive plate 5 are operative to reflect or refract light beams coming from various directions and direct them in various directions. Therefore, each individual lens 8 forms a light distribution originated from the individual lens 8. The light beam directed through the individual lens 8 in a certain direction contributes to the illumination and the light beam directed in a certain direction contributes to the production of light. The light beam may, of course, possibly contribute to both the illumination and the production of light at the same time.

In the above embodiment, the truncated polyhedral pyramid portion 17 has a truncated polyhedral pyramidal shape. This maybe replaced with a truncated cone portion 17 having a truncated conical shape, which can exert almost the same effect.

Therefore, the tip surfaces of the individual lenses 8 and light incidence lenses 9 impinge on the reflecting plate 3, and the upper surface of the truncated polyhedral pyramid 17 impinges on the light transmissive plate 5. This makes it possible to ensure a gap between the case 1 and the back lid 4 and retain the gap against the compressive stress exerted from both the case 1 and the back lid 4 as described above.

Therefore, as shown in Fig. 7, the luminaire 30 of the present invention can be buried and fixed in various footcloths 24 with a thickness of about 5 mm or less, such as rugs and carpets. Thus, a luminaire-buried footcloth 24 canbe realized, from which the luminaire does not protrude and which is robust and not broken when a person steps thereon. In order to ensure a high load-bearing capacity, the individual lenses 8, the light incidence lenses 9 and the truncated polyhedral pyramid 17 are desired to have a height of 10 mm or less. A height more than 10 mm increases the thickness of the luminaire and may impair the load-bearing capacity possibly.

## Claims

1. A luminaire (30) comprising a plurality of LEDs (12), a reflective member (17), a light transmissive plate (5) and a reflecting plate (3) provided oppositely almost in parallel,
wherein the plurality of LEDs (12) is provided on a first circumference of a first circle having a first radius (R3) centered on a centerline of the reflective member (17) at positions equally divided by a first central angle (α), and the reflective member (17) comprises a bottom surface facing the reflecting plate (3), and is provided between the light transmissive plate (5) and the reflecting plate (3), and reflects light from the plurality of LEDs (12);
**characterized in that**
the reflective member (17) is a truncated polyhedral pyramid or truncated cone comprising a plurality of successive oblique reflective surfaces (18) for reflecting light from the plurality of LEDs (12) in a direction almost perpendicular to the light transmissive plate (5) and a top surface facing the light transmissive plate (5), and
the luminaire (30) further comprising:
a plurality of individual lenses (8) provided on a second circumference of a circle having a second radius (R1) centered on the centerline of the reflective member (17) at positions equally divided with an angular shift (α/2) from the first central angle (α);
a plurality of light incidence lenses (9) provided on a third circumference of a third circle having a third radius (R2) centered on the centerline of the reflective member (17) at positions equally divided by the first central angle (α); and
wherein the third radius (R2) is greater than the second radius (R1) and less than the first radius (R3).

2. The luminaire (30) according to claim 1, **characterized in that** the individual lenses (8) are in any one of the shapes of circular cylinders, elliptic cylinders and prisms.

3. The luminaire (30) according to claim 1 or 2, **characterized in that** the individual lenses (8) and the light incidence lenses (9) are formed integrally with the light transmissive plate (5).

4. The luminaire (30) according to claim 3, **characterized in that** the top surface of the truncated polyhedral pyramid or truncated cone (17) impinges on the light transmissive plate (5), wherein the individual lenses (8) and the light incidence lenses (9) have respective end surfaces that impinge on the reflecting plate (3).

## Patentansprüche

1. Leuchte (30), die eine Vielzahl von LEDs (12), ein reflektives Glied (17), eine lichtdurchlässige Platte (5) und eine reflektierende Platte (3) aufweist, die nahezu fast parallel vorgesehen sind,
wobei die Vielzahl von LEDs (12) auf einem ersten Umfang eines ersten Kreises mit einem ersten Radius (R3) zentriert auf einer Mittellinie des reflektiven Gliedes (17) an Positionen vorgesehen ist, die um einen ersten mittleren Winkel (α) gleichmäßig verteilt sind, und wobei das reflektive Glied (17) eine untere Fläche aufweist, die zur reflektierenden Platte (3) weist und zwischen der lichtdurchlässigen Platte (5) und der reflektierenden Platte (3) vorgesehen ist und Licht von der Vielzahl von LEDs (12) reflektiert;
**dadurch gekennzeichnet, dass**
das reflektive Glied (17) eine abgeschnittene bzw. stumpfe vielflächige Pyramide oder ein Kegelstumpf ist, die bzw. der eine Vielzahl von aufeinander folgenden schrägen reflektierenden Oberflächen (18) aufweist, um Licht von der Vielzahl von LEDs (12) in einer Richtung zu reflektieren, die fast senkrecht zur lichtdurchlässigen Platte (5) und einer oberen Fläche ist, die zur lichtdurchlässigen Platte (5) weist, und
wobei die Leuchte (30) weiter Folgendes aufweist:
eine Vielzahl von einzelnen Linsen (8), die auf einem zweiten Umfang eines Kreises mit einem zweiten Radius (R1) vorgesehen ist, der auf der Mittellinie des reflektierenden Gliedes (17) zentriert ist, und zwar an Positionen, die gleich mit einer Winkelverschiebung (α/2) vom ersten mittleren Winkel (α) geteilt sind;
eine Vielzahl von Lichteinfalllinsen (9), die auf einem dritten Umfang eines dritten Kreises mit einem dritten Radius (R2), der auf der Mittellinie des reflektierenden Gliedes (17) zentriert ist, an Positionen vorgesehen sind, die gleichmäßig durch den ersten mittleren Winkel (α) geteilt sind; und
wobei der dritte Radius (R2) größer ist als der zweite Radius (R1) und kleiner ist als der erste Radius (R3).

2. Leuchte (30) nach Anspruch 1, **dadurch gekennzeichnet, dass** die einzelnen Linsen (8) irgendeine der Formen von Kreiszylindern, elliptischen Zylindern und Prismen haben.

3. Leuchte (30) nach Anspruch 1 oder 2, **dadurch gekennzeichnet, dass** die einzelnen Linsen (8) und die Lichteinfalllinsen (9) integral mit der lichtdurchlässigen Platte (5) ausgeformt sind.

4. Leuchte (30) nach Anspruch 3, **dadurch gekennzeichnet, dass** die Oberseite der stumpfen vielflächigen Pyramide oder des Kegelstumpfes (17) auf die lichtdurchlässige Platte (5) trifft, wobei die einzelnen Linsen (8) und die Lichteinfalllinsen (9) jeweilige Endflächen haben, die auf die reflektierende Platte (3) treffen.

## Revendications

1. Luminaire (30) comprenant une pluralité de DEL (12), un élément réfléchissant (17), une plaque transmettant la lumière (5) et une plaque réfléchissante (3) prévues l'une en face de l'autre presque parallèlement l'une à l'autre,
dans lequel la pluralité de DEL (12) sont prévues sur une première circonférence d'un premier cercle ayant un premier rayon (R3) centré sur une ligne centrale de l'élément réfléchissant (17) à des positions divisées de manière égale par un premier angle central (α), et l'élément réfléchissant (17) comprend une surface inférieure faisant face à la plaque réfléchissante (3), et est prévu entre la plaque transmettant la lumière (5) et la plaque réfléchissante (3), et réfléchit la lumière provenant de la pluralité de DEL (12) ;
**caractérisé en ce que**
l'élément réfléchissant (17) est une pyramide polyédrique tronquée ou un cône tronqué comprenant une pluralité de surfaces réfléchissantes (18) obliques successives pour réfléchir la lumière provenant de la pluralité de DEL (12) dans une direction presque perpendiculaire à la plaque transmettant la lumière (5) et une surface supérieure faisant face à la plaque transmettant la lumière (5), et
le luminaire (30) comprenant en outré :
une pluralité de lentilles individuelles (8) prévues sur une deuxième circonférence d'un cercle ayant un deuxième rayon (R1) centré sur la ligne centrale de l'élément réfléchissant (17) à des positions divisées de manière égale avec un décalage angulaire (α/2) par rapport au premier angle central (α) ;
une pluralité de lentilles d'incidence de lumière (9) prévues sur une troisième circonférence d'un troisième cercle ayant un troisième rayon (R2) centré sur la ligne centrale de l'élément réfléchissant (17) à des positions divisées de manière égale par le premier angle central (α) ; et
dans lequel le troisième rayon (R2) est supérieur au deuxième rayon (R1) et inférieur au premier rayon (R3).

2. Luminaire (30) selon la revendication 1, **caractérisé en ce que** les lentilles individuelles (8) ont l'une quelconque des formes de cylindres circulaires, de cylindres elliptiques et de prismes.

3. Luminaire (30) selon la revendication 1 ou 2, **caractérisé en ce que** les lentilles individuelles (8) et les lentilles d'incidence de lumière (9) sont formées d'un seul tenant avec la plaque transmettant la lumière (5).

4. Luminaire (30) selon la revendication 3, **caractérisé en ce que** la surface supérieure de la pyramide polyédrique tronquée ou du cône tronqué (17) empiète sur la plaque transmettant la lumière (5), dans lequel les lentilles individuelles (8) et les lentilles d'incidence de lumière (9) ont des surfaces d'extrémité respectives qui empiètent sur la plaque réfléchissante (3).
